# EUROPEAN PATENT SPECIFICATION

(11) **EP 4 311 738 B1**
(45) Date of publication and mention of the grant of the patent: **09.09.2026**
(21) Application number: 23186918.1
(22) Date of filing: 21.07.2023
(51) Int. Cl.: B62D 5/04, B62D 5/093, B62D 6/10

(54) **ELECTRO-ASSISTED HYDROSTATIC STEERING APPARATUS WITH FORCE SENSOR**
ELEKTROHYDRAULISCHE LENKUNTERSTÜTZUNG MIT KRAFTMESSSENSOR
APPAREIL DE DIRECTION HYDROSTATIQUE ÉLECTRO-ASSISTÉ AVEC CAPTEUR DE FORCE

(30) Priority: 29.07.2022 IT 202200016185
(43) Date of publication of application: 31.01.2024
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: AVERA-IP SRL

(56) References cited:
- EP-A1- 4 023 529
- US-A- 5 931 256
- US-B1- 6 213 246

## Description

### Technical Field

The present invention relates to a hydrostatic steering apparatus for vehicles, in particular for agricultural vehicles and/or heavy vehicles, such as tractors or earth-moving machines. Even more in particular, the invention relates to an electro-assisted hydrostatic steering apparatus.

### Prior art

As is known, a typical hydrostatic steering apparatus involves the steering wheels of a vehicle being steered by means of a hydraulic actuator, e.g., a double-acting hydraulic jack, which is connected to an oil tank through a pump and a hydraulic guide unit (commonly referred to as power steering).

The hydraulic guide unit normally comprises a hydraulic rotary valve and a metering unit, both of which are connected to and driven by the steering wheel of the vehicle by means of a steering shaft.

When the steering wheel is stationary, the hydraulic rotary valve is in a neutral configuration such that all oil coming from the pump is sent directly back to the tank.

When the steering wheel is driven in one direction, the hydraulic rotary valve moves into a configuration in which one of the two chambers of the double-acting jack is connected to the tank, while the second chamber is in connection with the pump delivery, thus driving the plunger of the double-acting jack in the sense of progressively varying the steering angle of the wheels.

By reversing the rotation direction of the steering wheel, the operation is the same, with the only difference being that the hydraulic rotary valve is brought into a configuration such that it reverses the hydraulic connection between the two chambers of the double-acting jack, thus causing the wheels to be steered in the opposite direction.

To make it easier to turn the steering wheel and/or to provide the driver with some resistance depending on the operating conditions, some hydrostatic steering systems are equipped with an electric motor adapted to apply a rotation torque to the steering shaft. This electric motor is generally controlled by an electronic control unit, which is configured to adjust the torque applied by the electric motor (e.g., by adjusting the supply current) based on the torque exerted by the driver on the steering wheel.

Thereby, depending on how the electronic control unit is programmed, it is possible to allow effortless steering by the driver, or it is possible to adjust the effort required from the driver based on driving conditions or other factors.

In order to allow a measurement of the torque exerted by the driver, it is known to divide the steering shaft into at least two torsionally independent portions, of which a first portion adapted to be connected to the steering wheel and a second portion adapted to be connected to the power steering, which are mutually connected by a torsion bar.

Thereby, when the driver turns the steering wheel, there is a slight angular phase shift between the first portion and the second portion of the steering shaft, which depends on the mechanical characteristics of the torsion bar and the amount of torque exerted.

By measuring this angular phase shift with a suitable sensor and knowing in advance the mechanical characteristics of the torsion bar, the electronic control unit is therefore capable of measuring the torque exerted on the steering wheel by the driver and consequently determining the assistance torque to request from the electric motor.

Although this system is effective, it introduces, due to the presence of the torsion bar, a significant structural complication which not only increases the overall dimensions and costs of the steering equipment, but also introduces possible sources of failure due to defects and/or wear.

Document US 6 213 246 B describes a hydrostatic steering apparatus according to the preamble of claim 1.

### Disclosure of the invention

An object of the present invention is to solve or at least limit the mentioned drawback of the prior art, within the context of a simple and rational solution and at a relatively reduced cost.

This and other objects are reached thanks to the characteristics of the invention as set forth in the independent claims. The dependent claims outline preferred and/or particularly advantageous aspects of the invention which however are not strictly required for the implementation thereof.

In particular, the invention makes available a hydrostatic steering apparatus for vehicles, comprising:
- at least one double-acting hydraulic jack equipped with a cylinder and a plunger adapted to subdivide the inner volume of the cylinder into a first and a second operating chamber, the plunger comprising at least one stem axially protruding from the cylinder and adapted to be connected to a steering wheel,
- a hydraulic guide unit (power steering) adapted to selectively convey a pressurised fluid (e.g., oil) into the first operating chamber or the second operating chamber of the cylinder,
- a steering shaft having a first end connected to the hydraulic guide unit and a second end connected to a manual steering member (e.g., a steering wheel),
- an electric motor adapted to apply a rotation torque to the steering shaft,
- a force sensor adapted to measure (directly or indirectly) an axial force applied to the plunger of the hydraulic jack, and
- an electronic control unit configured to adjust a value of the rotation torque applied by the electric motor to the steering shaft based on an axial force value measured by the force sensor.

Thanks to this solution, the torque sensor normally present on the current electro-assisted hydrostatic steering apparatuses is advantageously replaced by an axial force sensor which discharges onto the plunger of the hydraulic jack.

It is thereby possible to also eliminate the torsion bar of the steering shaft, making a significantly simpler, more robust and compact steering apparatus.

As a result, the steering apparatus can therefore be devoid of any torque sensor adapted to measure the torque applied on the steering shaft and/or any torsion bar adapted to kinematically connect the manual steering member (e.g., steering wheel) to the hydraulic guide unit.

According to the invention, the steering shaft is torsionally rigid and that its ends are torsionally rigidly connected to the hydraulic guide unit and the manual steering member, respectively.

Torsionally rigid means that the steering shaft is dimensioned so that it cannot be subjected to torsional deformation, at least not as a result of the torques which are applied to the steering shaft during the operation of the steering apparatus.

Torsionally rigidly connected means that all elements the which possibly connect the steering shaft to the manual steering member and to the hydraulic guide unit (e.g., further shafts or related joints) are similarly torsionally rigid.

According to an aspect of the invention, the force sensor can be a differential hydraulic pressure sensor between the first and the second operating chamber of the cylinder.

Thereby, the axial force unloaded on the plunger can be measured particularly easily and reliably.

However, it is not excluded that, in other embodiments, the force sensor could be a load cell or any other mechanical force or pressure transducer placed, for example, in the joints of the leverages connecting the plunger stem to the steering wheel.

Another aspect of the invention provides that the steering apparatus can comprise a first angular sensor, e.g., a resolver or an encoder, which is adapted to determine the angular position of a rotor of the electric motor with respect to a corresponding stator.

It is thereby advantageously possible to know the position of the rotor in real time and use it in managing the electric motor.

For example, the first angular sensor can be connected to the electronic control unit, which can be configured to control the torque generated by the electric motor based on the rotor position detected by said first angular sensor.

The electronic control unit can also use the first angular sensor to carry out self-driving functions, e.g., to drive the electric motor so that it automatically pilots the steering shaft, and consequently the wheels, in a sequence of positions corresponding to a desired trajectory of the vehicle, established for example by a programme, based on the position of the vehicle on the ground, which in turn can be detected by the driver or by a geolocation system, for example but not exclusively GPS.

The first angular sensor can also be used by the electronic control unit to deactivate the aforesaid self-driving functions, e.g., when the driver grasps the manual steering member (e.g., the steering wheel).

In fact, by comparing the actual position of the manual steering member, measured by the first angular sensor, with that established by the programming, if these two positions do not coincide, the electronic control unit can recognise that the manual steering member has been grasped by the driver and automatically deactivate the self-driving function.

The first angular sensor can also be particularly useful if the electric motor is a three-phase electric motor, e.g., a three-phase synchronous electric motor with permanent magnets, whose proper functioning requires that the frequency of the phase currents be synchronous with the rotation of the rotor and the magnetic field generated by the stator windings be oriented in a manner corresponding to the angular position of the rotor.

According to another aspect of the invention, the steering apparatus can also comprise a second angular sensor for measuring the angular position of the steering shaft.

In particular, this second sensor can provide the control unit with an absolute angular position of the steering shaft and, therefore, of the manual steering member (e.g., steering wheel), within a predefined range of angular values, for example but not necessarily between 0 and 360°, with respect to a predetermined reference position.

This information can be useful for safety reasons and/or to improve the reliability of the system.

For example, the second angular sensor associated with the steering shaft can be used by the electronic control unit to assess the match/reliability of the measurements made by the first angular sensor and, if necessary, to set/calibrate said first angular sensor if such a match is not found.

The second angular sensor associated with the steering shaft can also be used by the electronic control unit to know the absolute position of the steering shaft and, therefore, of the manual steering member (e.g., steering wheel), at the instant the control unit is switched on.

The electronic control unit can also be configured to control the electric motor (e.g., to adjust the torque generated by it) based on the measurements made by the aforesaid second angular sensor.

According to another aspect of the invention, the steering apparatus can further comprise a third angular sensor adapted to measure the steering angle of said at least one steering wheel.

This third angular sensor can also be advantageously used by the electronic control unit to control the motor (e.g., to adjust the torque generated by it) depending on the steering angle detected.

The third angular sensor can also be used by the electronic control unit to perform autocentring functions, i.e., to control the electric motor so that it automatically returns the wheels to a predetermined position, e.g., corresponding to the straight travel of the vehicle.

A different aspect of the invention provides that the electric motor can comprise an annular rotor coaxially fitted to the steering shaft.

This advantageously increases the efficiency of the system, minimising the mechanical losses inherent in the transfer of torque from the electric motor to the steering shaft, as well as decreasing the overall footprint of the steering apparatus.

According to another aspect of the invention, the plunger of the double-acting hydraulic jack can comprise a second stem axially protruding from the cylinder and adapted to be connected with a second steering wheel.

Thanks to this solution, a single double-acting hydraulic jack can advantageously drive both steering wheels which are normally present on a vehicle.

Another aspect of the invention is that the hydraulic guide unit (power steering) can comprise a rotary metering unit and distributor.

Thanks to this solution, an overall very compact and high-performance steering apparatus is provided.

Another embodiment of the invention lastly makes a vehicle available, for example an agricultural vehicle or a heavy vehicle, such as a tractor or earth-moving machine, which comprises the steering apparatus outlined above.

This embodiment benefits from the steering apparatus in order to essentially obtain the advantages related thereto.

### Brief description of the drawings

Further features and advantages of the invention will be more apparent after reading the following description provided by way of non-limiting example, with the aid of the accompanying drawings.
Figure 1 shows a schematic representation of a hydrostatic steering apparatus according to an embodiment of the present invention.
Figure 2 shows a longitudinal section of an electro-assisted steering assembly inserted in the apparatus of figure 1.

### Detailed description

The above figures relate to a hydrostatic steering apparatus 100 for self-propelled vehicles, in particular for agricultural vehicles and/or heavy vehicles adapted to move at low speeds (typically below 60 km/h), such as agricultural tractors or earth-moving machines. The steering apparatus 100 can comprise a double-acting hydraulic jack 105, which is equipped with a cylinder 110 and a relative plunger 115 which subdivides the inner volume of the cylinder 110 into two separate operating chambers 120 and 125.

The plunger 115 of the hydraulic jack 105 can comprise two opposite stems, which are arranged parallel to the axis of the cylinder 110, preferably coaxial with the latter.

Each of these stems protrudes outside the cylinder 110 and is mechanically connected to a respective steering wheel 130 by means of suitable leverages adapted to transform the axial movement of the stem into a rotation of the steering wheel 130 around a prefixed steering axis.

Thereby, each movement of the plunger 115 in one direction or the opposite direction corresponds to a different steering angle of both steering wheels 130.

The steering apparatus 100 can further comprise a pump 135, e.g., a positive displacement pump driven by the motor of the vehicle, which is adapted to withdraw a fluid, typically an incompressible fluid (e.g., oil), from a tank 140 and send it pressurised to a hydraulic guide unit 145, which is also commonly referred to as power steering.

The guide unit 145 comprises an outer body 150, which can be provided with a first port in direct hydraulic communication with the delivery of the pump 135, a second port in direct hydraulic communication with the tank 140, a third port in direct hydraulic communication with the first chamber 120 of the hydraulic jack 105, and a fourth port in direct hydraulic communication with the second chamber 125 of the hydraulic jack 105.

In particular, the third port can be connected with the first chamber 120 by means of a duct 155 while the fourth port can be connected with the second chamber 125 by means of a different duct 160.

Within the body 150, the guide unit 145 can comprise a metering unit and a rotary distributor (not visible), both of which are connected to a steering wheel 165, or other similar manual steering member of the vehicle.

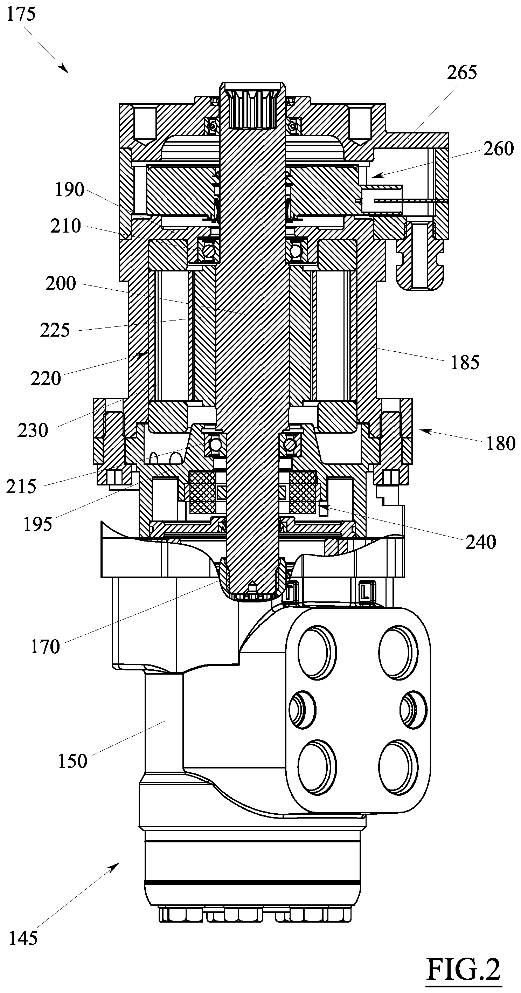

The metering unit can comprise a kind of geared displacement pump, commonly referred to as a 'gerotor', which comprises an inner gear wheel which meshes with an outer toothed crown, in which the gear wheel is slightly offset with respect to the toothed crown and is directly fitted to an input shaft 170 of the guide unit 145 (see fig. 2), which is in turn connected to the steering wheel 165.

The rotary distributor can comprise a rotary unit, rotatably received inside the body 150, which is provided with two cylinders coaxially inserted into each other, of which an inner cylinder directly fitted to the input shaft 170 and an outer cylinder adapted to rotate with respect to the inner cylinder by a limited angle in both directions.

When the steering wheel 165 is stationary, the outer cylinder of the distributor is in a neutral position with respect to the inner cylinder, such that all the oil entering the distributor body from pump 135 is sent directly back to the tank 140.

When the steering wheel 165 is driven in either direction, the inner cylinder of the distributor makes a small rotation with respect to the outer cylinder and moves to an initial operating position in which the first chamber 120 of the double-acting jack is in connection with the tank 140, while the second chamber 125 is in connection with the delivery of the pump 135 through the metering unit.

Thereby, while continuing to rotate the steering wheel 165 in the same direction, the metering unit transfers an amount of pressurised oil to the second chamber 125 which is proportional to the rotation performed by the gerotor's inner gear wheel and thus by the steering wheel 165, thus driving the plunger 115 of the hydraulic jack 105 in the sense of proportionally varying the steering angle of the steering wheels 130.

When the steering wheel 165 is stopped, the outer cylinder of the distributor returns to the neutral position by means of suitable spring systems, so that the steering wheels 130 are stopped in the configuration reached.

Reversing the direction of rotation of the steering wheel 165, the operation of the guide unit 145 is the same, the only difference being that the inner cylinder of the distributor moves to a second operating position such that it connects the second chamber 125 of the hydraulic jack 105 with the tank 140 and the first chamber 120 with the delivery of the pump 135 (always through the metering unit), obtaining a rotation of the steering wheels 130 in the opposite direction to the previous one.

Going into more detail, the hydraulic guide unit 145 is connected with the steering wheel 165 through an electro-assisted steering assembly, which is globally referred to as 175. The steering assembly 175 can comprise a support frame 180, substantially shaped as a closed casing, which can be directly connected to the body 150 of the guide unit 145 so as to form a single compact assembly.

In the example illustrated, the support frame 180 comprises a side wall 185, having a substantially cylindrical shape, the opposite axial ends of which are closed by two bottom walls, which are respectively indicated with 190 and 195.

A steering shaft 200 is rotatably received inside the support frame 180.

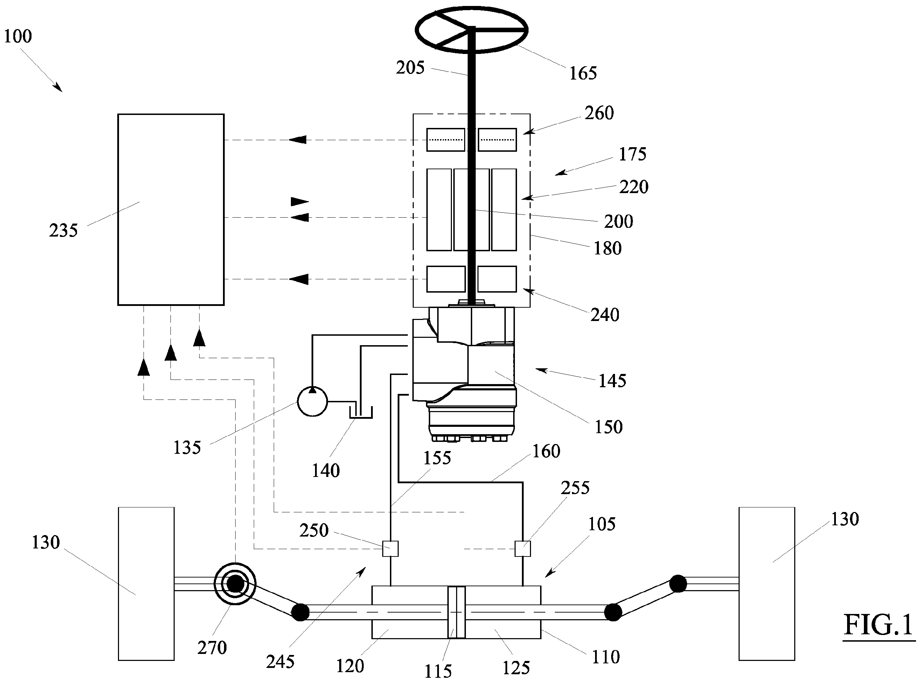

A first end of the steering shaft 200 is connected to the steering wheel 165, e.g., through a steering column 205 (see fig. 1), so that it is rotatably constrained to the latter.

For example, the first end of the steering shaft 200 can be placed coaxially and rotationally constrained to the steering column 205 through a splined-profile fitting.

The second and opposite end of the steering shaft 200 is connected to the input shaft 170 of the guide unit 145, so as to be rotatably constrained to the latter.

For example, the second end of the steering shaft 200 can be placed coaxial and rotationally constrained to the input shaft 170 by means of a further splined-profile fitting.

According to a preferred aspect of the invention, the steering shaft 200 is torsionally rigid, i.e., it is not capable of torsionally deforming due to the torsional moments to which it is subjected in the normal operation of the steering apparatus 100.

In other words, the steering shaft 200 can be dimensioned so that its opposite ends cannot angularly offset with respect to each other (rotating around the axis of the shaft), not even by the maximum bending torque which can reasonably be applied to the steering shaft 200 by all the components connected thereto, including the torque exerted by the driver through the steering wheel 165.

To obtain this torsional rigidity, it is preferable (although not strictly necessary) for the steering shaft 200 to be made as a monolithic internally solid body.

It is also preferable that the steering shaft 200 is then torsionally rigidly connected with the steering wheel 165 and torsionally rigidly connected with the input shaft 170 of the guide unit 145.

'Torsionally rigidly connected' with the steering wheel 165 means that each rotation of the steering wheel 165 must always be matched also by a rotation of the steering shaft 200 and vice versa, regardless of the amount of torque applied during the normal operation of the steering apparatus 100.

To obtain this type of connection, all the shafts and fittings which are possibly (but not necessarily) provided for connecting the steering shaft 200 to the steering wheel 165, for example the steering column 205 and the relative fittings, must be torsionally rigid.

Similarly, 'torsionally rigidly connected' with the input shaft 170 of the guide unit 145 means that each rotation of the steering shaft 200 must always be matched also by a rotation of the input shaft 170, and vice versa, regardless of the amount of torque applied during the normal operation of the steering apparatus 100.

To obtain this connection, all the shafts (absent in the example) and the fittings which are possible provided to connect the steering shaft 200 to the input shaft 170 must be torsionally rigid.

In particular, unlike the conventionally known systems outlined in the introduction, it is preferable that the steering apparatus 100 is completely devoid of any torsion bar adapted to kinematically connect the steering wheel 165 to the input shaft 170 of the guide unit 145.

Returning to the steering shaft 200, it can be rotatably coupled to the support frame 180 through a pair of bearings, of which a first bearing 210, which is placed at the bottom wall 190, and a second bearing 215, which is placed at the opposite bottom wall 195.

The steering assembly 175 further comprises an electric motor 220, preferably a three-phase electric motor, for example a three-phase synchronous motor with permanent magnets, which can be contained within the support frame 180, in this case surrounded by the side wall 185.

The electric motor 220 generally comprises an annular rotor 225 and a stator 230.

The rotor 225 can have an annular shape and can be directly and coaxially inserted on the steering shaft 200, for example positioned so that the entire axial footprint of the rotor 225 is completely contained between the first bearing 210 and the second bearing 215. As an example, the steering shaft 200 can be rotationally constrained to the rotor 225 of the electric motor 220 by means of keying or by means of an interference fit.

In any case, the rotor 225 can be configured so as to stay in direct contact with the steering shaft 200 throughout its axial extension, i.e., throughout the axial extension of the rotor 225, so that no gaps remain defined between the latter and the steering shaft 200. Thereby, the radial footprint of the rotor 225 can be contained, whose maximum (outer) diameter can be kept at less than twice the maximum diameter of the steering shaft 200. The stator 230 can also have an annular shape and can coaxially surround the rotor 225. The stator 230 can be fixed inside the support frame 180 of the steering assembly 175. Permanent magnets or electrical rotor windings can be directly applied to the rotor 225, while electrical stator windings can be directly applied to the annular stator 230.

In general, the stator windings are connected to an electrical power source, for example a vehicle battery, by means of suitable electrical connections.

These electrical connections can be made to an electronic control unit 235 (see fig. 1), e.g., based on a microcontroller, which can be configured to control the supply current and/or voltage (both amplitude and possibly frequency) in order to regulate the torque generated by the motor 220.

To carry out a correct control, the electronic control unit 235 may need to know the position of the rotor 225 with respect to the stator 230.

For this and other reasons, the steering assembly 175 can comprise a first angular sensor 240, which can be connected to the electronic control unit 235 and is adapted to detect the position of the rotor 225 with respect to the stator 230.

This first angular sensor 240 can be positioned within the support frame 180, outside the space comprised between the first bearing 210 and the second bearing 215, for example received in a seat of the bottom wall 195 facing the guide unit 145.

The first angular sensor 240 can be a resolver or an encoder and can have a rotor part integral with the steering shaft 200 surrounded by a stator part fixed to the support frame 180.

As mentioned above, the electronic control unit 235 can be configured to control the torque generated by the electric motor 220 based on the position of the rotor 225 detected by the first angular sensor 240.

The electronic control unit 235 can eventually use the first angular sensor 240 to also carry out self-driving functions, for example to drive the electric motor 220 so that it automatically pilots the steering shaft 200 and, consequently, the steering wheels 130 in a series of predetermined positions corresponding to a predefined vehicle trajectory.

This trajectory can, for example, be established by a programme based on the vehicle's position on the ground, which in turn can be detected by the driver or by a geolocation system, for example but not exclusively GPS.

The electronic control unit 235 can be configured to use the first angular sensor 240 also to deactivate the aforesaid self-driving functions, for example when the driver grips the steering wheel 165.

For example, the electronic control unit 235 can be configured to compare the actual position of the steering wheel 165, measured by the first angular sensor 240, with the position established by the programming and, if these two positions do not coincide, to recognise that the steering wheel 165 has been grasped by the driver and automatically deactivate the self-driving function.

The first angular sensor can also be particularly useful if the electric motor is a three-phase electric motor, e.g., a three-phase synchronous electric motor with permanent magnets, whose proper operation requires that the frequency of the phase currents be synchronous with the rotation of the rotor and the magnetic field generated by the stator windings always be oriented in a manner corresponding to the angular position of the rotor 225.

As illustrated in figure 1, the steering apparatus 100 can further comprise a force sensor, globally indicated with 245, which is connected to the electronic control unit 235 and is capable of measuring (directly or indirectly) an axial force applied to the plunger 115 of the hydraulic jack 105.

In the preferred embodiment illustrated here, the force sensor 245 can be a sensor adapted to measure the differential hydraulic pressure between the first and the second operating chamber 120 and 125 of the hydraulic jack 105.

For example, the force sensor 245 can comprise two pressure transducers 250 and 255, respectively, for measuring the hydraulic pressure in the first operating chamber 120 and the second operating chamber 125, each of which can, for example, be easily and advantageously installed along the hydraulic duct 155 or correspondingly 160 connecting the respective operating chamber to the guide unit 145.

These two transducers 250 and 255 can be directly connected to the electronic control unit 235, which can be configured to calculate the differential pressure (i.e., the difference between the two pressures).

However, it is not excluded that, in other embodiments, the force sensor 245 could be a load cell or any other mechanical force or pressure transducer placed, for example, in the joints of the leverages connecting the stems of the plunger 115 to the steering wheels 130.

In any case, as mentioned above, the electric motor 220 and the force sensor 245 can be connected to the electronic control unit 235, which can be configured to receive measurement signals from the force sensor 245 and to control the operation of the electric motor 220 based on such measurement signals.

More in particular, the electronic control unit 235 can be configured to use the signals from the force sensor 245, and possibly those from the first angular sensor 240, to determine an auxiliary torque to be applied to the steering shaft 200.

Auxiliary torque means a torque which is applied to the steering shaft 200 during a manual driving phase by a driver and which, as a result, is added to the torque which said driver exerts through the operation of the steering wheel 165.

In other words, the electronic control unit 235 can be configured to command the electric motor 220 to apply an auxiliary (or assisting) torque to the steering shaft 200, the value of which is adjusted based on or as a function of the force measured by the sensor 245, and possibly the position of the rotor 225 measured by the first angular sensor 240.

Thereby, depending on the programme run by the electronic control unit 235, it is possible to allow an effortless (or less effortful) steering of the wheels 130 by the driver, or it is possible to adjust the effort required from the driver (sometimes even increasing it), based on the driving conditions or other factors.

To vary the amount of torque applied by the electric motor 220, the electronic control unit 235 can act by, for example, varying the electrical supply parameters, such as current intensity, voltage and/or switching frequency.

The steering apparatus 100 can further comprise a second angular sensor 260, which is adapted to detect the angular position of the steering shaft 200 with respect to an absolute reference position, for example a fixed reference position with respect to the support frame 180.

The second angular sensor 260, which can be for example an inductive sensor or an encoder, is generally provided with a rotor part rotatably integral with the steering shaft 200, for example directly fitted to the steering shaft 200 or any other shaft connecting the latter to the steering wheel 165 or to the input shaft 170 of the guide unit 145 (for example to the steering column 205), and a fixed stator part surrounding it.

In the embodiment illustrated in the figures, the second angular sensor 260 can be positioned inside the support frame 180, outside the space between the first bearing 210 and the second bearing 215 and on the opposite side with respect to the first angular sensor 240, in this case housed in a seat formed by a cover 265 which can be fixed to the bottom wall 190.

However, it is not excluded that in other embodiments, the second angular sensor 260 can be installed independently of the steering assembly 175, for example outside the support frame 180 and possibly (as mentioned) associated with the steering column 205. The second angular sensor 260 can be connected to the electronic control unit 235, which can use it to calculate an absolute angular position of the steering shaft 200, and thus of the steering wheel 165, within a predefined range of angular values, for example but not necessarily between 0 and 360°, with respect to a predetermined reference position.

This information can be used by the electronic control unit 235 for reasons of safety and reliability of the system and/or for other functions.

For example, the electronic control unit 235 can be configured to use the measurements taken by the second angular sensor 260 to calibrate and/or set the first angular sensor 240 when/if required.

In particular, the electronic control unit 235 can compare the measurements taken by the first angular sensor 240 with those taken by the second angular sensor 260 and, if such measurements do not coincide, it can set the first angular sensor 240 to the measurement taken by the second angular sensor 260.

The second angular sensor 260 associated with the steering shaft 200 can also be used by the electronic control unit 235 to know the absolute position of the steering shaft 200 and, therefore, of the steering wheel 165, upon the activation/ignition of the control unit 235 itself.

The steering apparatus 100 can lastly comprise a third angular sensor 270, which is adapted to detect the angular position of at least one of the steering wheels 130 with respect to a steering axis thereof.

This third angular sensor 270, which can be a rotary hall-effect or potentiometric sensor, can be placed at the swivel adapted to define the steering axis of the steering wheel 130 with respect to a chassis of the vehicle.

The third angular sensor 270 can be connected to the electronic control unit 235, which can be configured to use it to adjust the assistance torque provided by the electric motor 220 also as a function of the steering angle of the steering wheel 130.

In other words, the electronic control unit 235 can be configured to command the electric motor 220 to apply an auxiliary (or assisting) torque to the steering shaft 200, the value of which is adjusted based on, or as a function of, not only the force measured by the sensor 245 and possibly the rotor position 225 measured by the first angular sensor 240, but also the steering angle measured by the third angular sensor 270.

The electronic control unit 235 can also be configured to use the third angular sensor 270 to perform autocentring functions, i.e., to control the electric motor 220 so that it automatically returns the wheels 130 to a predetermined position, e.g., to the position corresponding to the straight-wheel condition and thus to the straight travel of the vehicle.

Specifically, the electronic control unit 235 can thus be configured to drive the electric motor 220 until the position detected by the third angular sensor 270 reaches the desired position.

Obviously, a person skilled in the art will be able to make numerous technical-applicative modifications to all that above, without thereby departing from the scope of the invention as hereinbelow claimed.

## Claims

1. A hydrostatic steering apparatus (100) for vehicles, comprising:
- at least one double-acting hydraulic jack (105) equipped with a cylinder (110) and a plunger (115) adapted to subdivide the inner volume of the cylinder (110) into a first and a second operating chamber (120, 125), the plunger (115) comprising at least one stem axially protruding from the cylinder (110) and adapted to be connected to a steering wheel (130),
- a hydraulic guide unit (145) adapted to selectively convey a pressurised fluid into the first operating chamber (120) or second operating chamber (125) of the cylinder (110),
- a steering shaft (200) having a first end connected to the hydraulic guide unit (145) and a second end connected to a manual steering member (165),
- an electric motor (220) adapted to apply a rotation torque to the steering shaft (200),
- a force sensor (245) adapted to measure an axial force applied to the plunger (115) of the hydraulic jack (105), and
- an electronic control unit (235) configured to adjust a value of the rotation torque applied by the electric motor (220) to the steering shaft (200) based on an axial force value measured by the force sensor (245),
**characterised in that** the steering shaft (200) is torsionally rigid and the ends thereof are torsionally rigidly connected to the hydraulic guide unit (145) and to the manual steering member (165), respectively.

2. A steering apparatus (100) according to claim 1, wherein the force sensor (245) is a differential hydraulic pressure sensor between the first and second operating chambers (120, 125) of the cylinder (110).

3. A steering apparatus (100) according to any one of the preceding claims, comprising a first angular sensor (240) adapted to determine the angular position of a rotor (225) of the electric motor with respect to a corresponding stator (230).

4. A steering apparatus (100) according to any one of the preceding claims, comprising a second angular sensor (260) adapted to measure the angular position of the steering shaft (200).

5. A steering apparatus (100) according to any one of the preceding claims, comprising a third angular sensor (270) adapted to measure the steering angle of said at least one steering wheel (130).

6. A steering apparatus (100) according to any one of the preceding claims, wherein the electric motor (220) comprises an annular rotor (225) coaxially fitted to the steering shaft (200).

7. A steering apparatus (100) according to any one of the preceding claims, wherein the plunger (115) of the hydraulic jack (105) comprises a second stem axially protruding from the cylinder (110) and adapted to be connected with a second steering wheel (130).

8. A steering apparatus (100) according to any one of the preceding claims, wherein the hydraulic guide unit (145) comprises a rotary metering unit and distributor.

9. A vehicle comprising a steering apparatus (100) according to any one of the preceding claims.

## Patentansprüche

1. Hydrostatische Lenkvorrichtung (100) für Fahrzeuge, umfassend:
- mindestens einen doppeltwirkenden Hydraulikzylinder (105), der mit einem Zylinder (110) und einem Kolben (115) ausgestattet ist, der angepasst ist, um das innere Volumen des Zylinders (110) in eine erste und eine zweite Arbeitskammer (120, 125) zu unterteilen, der Kolben (115) umfassend mindestens eine Kolbenstange, die axial aus dem Zylinder (110) hervorsteht und angepasst ist, um mit einem Lenkrad (130) verbunden zu werden,
- eine hydraulische Führungseinheit (145), die angepasst ist, um ein unter Druck stehendes Fluid selektiv in die erste Arbeitskammer (120) oder die zweite Arbeitskammer (125) des Zylinders (110) zu leiten,
- eine Lenkwelle (200), deren erstes Ende mit der hydraulischen Führungseinheit (145) und deren zweites Ende mit einem manuellen Lenkelement (165) verbunden ist,
- ein Elektromotor (220), der angepasst ist, um ein Drehmoment auf die Lenkwelle (200) auszuüben,
- einen Kraftsensor (245), der angepasst ist, um eine Axialkraft zu messen, die auf den Kolben (115) des Hydraulikzylinders (105) ausgeübt wird, und
- eine elektronische Steuereinheit (235), die konfiguriert ist, um einen Wert des Drehmoments, das von dem Elektromotor (220) auf die Lenkwelle (200) ausgeübt wird, basierend auf einem von dem Kraftsensor (245) gemessenen Axialkraftwert einzustellen,
**dadurch gekennzeichnet, dass** die Lenkwelle (200) torsionssteif ist und die Enden davon torsionssteif mit jeweils der hydraulischen Führungseinheit (145) und dem manuellen Lenkelement (165) verbunden sind.

2. Lenkvorrichtung (100) nach Anspruch 1, wobei der Kraftsensor (245) ein hydraulischer Differenzdrucksensor zwischen der ersten und der zweiten Arbeitskammer (120, 125) des Zylinders (110) ist.

3. Lenkvorrichtung (100) nach einem der vorherigen Ansprüche, umfassend einen ersten Winkelsensor (240), der angepasst ist, um die Winkelposition eines Rotors (225) des Elektromotors in Bezug auf einen entsprechenden Stator (230) zu bestimmen.

4. Lenkvorrichtung (100) nach einem der vorherigen Ansprüche, umfassend einen zweiten Winkelsensor (260), der angepasst ist, um die Winkelposition der Lenkwelle (200) zu messen.

5. Lenkvorrichtung (100) nach einem der vorherigen Ansprüche, umfassend einen dritten Winkelsensor (270), der angepasst ist, um den Lenkwinkel des mindestens einen Lenkrads (130) zu messen.

6. Lenkvorrichtung (100) nach einem der vorherigen Ansprüche, wobei der Elektromotor (220) einen ringförmigen Rotor (225) umfasst, der koaxial auf der Lenkwelle (200) aufgesteckt ist.

7. Lenkvorrichtung (100) nach einem der vorherigen Ansprüche, wobei der Kolben (115) des Hydraulikzylinders (105) eine zweite Kolbenstange umfasst, die axial aus dem Zylinder (110) hervorsteht und angepasst ist, um mit einem zweiten Lenkrad (130) verbunden zu sein.

8. Lenkvorrichtung (100) nach einem der vorherigen Ansprüche, wobei die hydraulische Führungseinheit (145) eine drehende Dosiereinheit und einen Verteiler umfasst.

9. Fahrzeug, umfassend eine Lenkvorrichtung (100) nach einem der vorherigen Ansprüche.

## Revendications

1. Appareil de direction hydrostatique (100) pour véhicules, comprenant :
- au moins un vérin hydraulique à double effet (105) équipé d'un cylindre (110) et d'un piston (115) configuré pour subdiviser le volume intérieur du cylindre (110) en une première et une deuxième chambre de travail (120, 125), le piston (115) comprenant au moins une tige qui fait saillie de façon axiale à partir du cylindre (110) et configuré pour être relié à un volant (130),
- une unité de guidage hydraulique (145) adaptée pour acheminer de façon sélective un liquide sous pression dans la première chambre de travail (120) ou la deuxième chambre de travail (125) du cylindre (110),
- un arbre de direction (200) dont une première extrémité est reliée à l'unité de guidage hydraulique (145) et une deuxième extrémité à un élément de direction manuel (165) ;
- un moteur électrique (220) configuré pour appliquer un couple de rotation à l'arbre de direction (200),
- un capteur de force (245) configuré pour mesurer une force axiale appliquée au piston (115) du vérin hydraulique (105), et
- une unité de commande électronique (235) configurée pour régler une valeur du couple de rotation appliqué par le moteur électrique (220) à l'arbre de direction (200) en fonction d'une valeur de force axiale mesurée par le capteur de force (245),
**caractérisé en ce que** l'arbre de direction (200) est rigide en torsion et que ses extrémités sont rigidement connectées en torsion à l'unité de guidage hydraulique (145) et à l'élément de direction manuel (165), respectivement.

2. Appareil de direction (100) selon la revendication 1, dans lequel le capteur de force (245) est un capteur de pression hydraulique différentielle entre la première et la deuxième chambre de travail (120, 125) du cylindre (110).

3. Appareil de direction (100) selon l'une quelconque des revendications précédentes, comprenant un premier capteur angulaire (240) configuré pour déterminer la position angulaire d'un rotor (225) du moteur électrique par rapport à un stator correspondant (230).

4. Appareil de direction (100) selon l'une quelconque des revendications précédentes, comprenant un deuxième capteur angulaire (260) configuré pour mesurer la position angulaire de l'arbre de direction (200).

5. Appareil de direction (100) selon l'une quelconque des revendications précédentes, comprenant un troisième capteur angulaire (270) configuré pour mesurer l'angle de braquage dudit au moins un volant (130).

6. Appareil de direction (100) selon l'une quelconque des revendications précédentes, dans lequel le moteur électrique (220) comprend un rotor annulaire (225) monté de façon coaxiale sur l'arbre de direction (200).

7. Appareil de direction (100) selon l'une quelconque des revendications précédentes, dans lequel le piston (115) du vérin hydraulique (105) comprend une deuxième tige qui fait saillie axialement à partir du cylindre (110) et est configuré pour être relié à un deuxième volant (130).

8. Appareil de direction (100) selon l'une quelconque des revendications précédentes, dans lequel l'unité de guidage hydraulique (145) comprend une unité de dosage rotative et un distributeur.

9. Véhicule comprenant un appareil de direction (100) selon l'une quelconque des revendications précédentes.
